Europäisches Patentamt

European Patent Office

Office européen des brevets

(19)

(11) Veröffentlichungsnummer: **0 461 390 A1**

## (12) EUROPÄISCHE PATENTANMELDUNG

(21) Anmeldenummer: 91107378.1

(22) Anmeldetag: 07.05.91

(51) Int. Cl.5: **B60T 11/32**, F16K 17/26

(30) Priorität: 13.06.90 DE 4018841

(43) Veröffentlichungstag der Anmeldung:
18.12.91 Patentblatt 91/51

(84) Benannte Vertragsstaaten:
AT BE CH DE FR GB IT LI NL SE

(71) Anmelder: **MAN Nutzfahrzeuge Aktiengesellschaft**
**Dachauer Strasse 667 Postfach 50 06 20**
**W-8000 München 50(DE)**

(72) Erfinder: **Albertshofer, Günter, Dipl.-Ing. (FH)**
**Murnauer Strasse 120**
**W-8000 München 70(DE)**

(54) **Indirekt gesteuertes 3/3-Wege-Ventil.**

(57) Die Erfindung zeigt ein indirekt gesteuertes 3/3-Wege-Ventil (1) mit einen Ventilgehäuse (2) und einem Verdrängerkörper (6). Im Steuerbereich (3) des Ventils (1) sind zwei diametral auf einer Achse liegende Fluidausgänge (4, 4') und ein zwischen diesen liegender, um 90° versetzter Fluideingang (5) angeordnet. Die Fluidausgänge (4, 4') sind von dem Verdrängerkörper (6) verschließbar, während der Fluideingang (5) von dem Verdrängerkörper nicht verschließbar ist. Der Steuerbereich (3) ist derart gestaltet, daß zwischen Fluideingang (5) und Verdrängerkörper (6) in seiner Mittelstellung ein freier Ringspalt (7) entsteht. Zur Stabilisierung der Mittelstellung des Verdrängerkörpers vor dem Fluideingang sind zwei sich an den Fluidausgängen (4, 4') abstützende Federn (8, 8') vorgesehen.

Fig.1

Die Erfindung bezieht sich auf ein indirekt gesteuertes 3/3-Wiege-Ventil mit einem Ventilgehäuse und einem Verdrängerkörper.

Es sind Wegeventile bekannt, die den Durchfluß in voneinander unabhängige Fluidkreise mit gegenseitiger Absicherung voneinander gestatten. Die Regelung von Wegeventilen erfolgt stets direkt über Steuerleitungen, wodurch ein erhöhter Bauaufwand erforderlich wird.

Es gibt weiterhin indirekt gesteuerte Ventile (Wechselventile, Rückschlagventile), die eine gegenseitige Absicherung von Fluidkreisen ermöglichen, in den der jeweils mit dem niedrigsten Druckniveau beaufschlagte Kreis zuerst mit Vorratsluft versorgt wird ("select-low"). Eine vorrangige Beaufschlagung des jeweils höchsten Druckniveaus ("select-high") läßt sich mit diesen Ventilen auch bei schaltungstechnischen Kombinationen nicht erzielen. Indirekt betätigte Ventile haben im Regelfall nur zwei Schaltstellungen.

Schutzventile erlauben es, mehrere Fluidkreise gegeneinander abzusichern und sie nach dem ("select-low-Prinzip") zu befüllen. Diese können aber in der Leerlaufstellung, in der alle Kreise bevorratet werden, nicht drucklos durchströmt werden und können auch nicht nach dem "select-high-Prinzip" geschaltet werden.

Der Erfindung liegt die Aufgabe zugrunde, ein einfaches Ventil mit der Möglichkeit einer "select-high-Schaltung" zu schaffen.

Dies wird erfindungsgemäß dadurch erreicht, daß im Steuerbereich des Ventils zwei diametral auf einer Achse liegende Fluidausgänge und ein zwischen diesen liegender, um 90° versetzter Fluideingang angeordnet sind, wobei die Fluidausgänge von dem Verdrängerkörper verschließbar sind, während der Fluideingang von dem Verdrängerkörper nicht verschließbar ist. Der Steuerbereich wird hierbei derart gestaltet, daß zwischen Fluideingang und Verdrängerkörper in seiner Mittelstellung ein freier Ringspalt entsteht. Das erfindungsgemäße Ventil gestattet bei sehr einfachem Aufbau drei Schaltstellungen zu realisieren. So läßt sich eine "select-high"-Regelung zur Befüllung von mehreren Druckluftkreisen schalten, so daß jeweils der unter höchstem Druckniveau stehende Kreis zuerst befüllt wird, wobei das Ventil ein druckloses Durchströmen in Leerlaufstellung (0-Stellung des Ventils) erlaubt, was für eine Nachschaltung von Druckreglern von entscheidender Bedeutung ist.

Nach einer vorteilhaften Ausbildung der Erfindung ist der Steuerbereich zylindrisch ausgebildet und als Verdrängerkörper eine Kugel vorgesehen. Solcherart ist der Fertigungsaufwand am geringsten und eine optimale Funktion gewährleistet.

Nach einem weiteren Merkmal der Erfindung ist der Verdrängerkörper in seiner Mittelstellung vor dem Fluideingang schwimmend in zwei sich an den Fluidausgängen abstützenden Federn gehalten. In der Füllstellung bei gleicher Druckbeaufschlagung von beiden Fluidausgängen steht der Verdrängerkörper in der Mitte und wird dort durch die Kugelumströmung stabil in der Mittelstellung gehalten. Zur zusätzlichen Stabilisierung kann diese Mittelstellung durch mechanische, elektrische oder magnetische Vorrichtungen unterstützt werden. Als einfachste Ausführung bieten sich hier den Verdrängerkörper abstützende Federn an.

Die Erfindung ist in einem Ausführungsbeispiel dargestellt.

Es zeigen:

Fig. 1 ein indirekt gesteuertes 3/3-Wege-Ventil im Querschnitt mit Verdrängerkörperlage in der Mitte,

Fig. 2 ein indirekt gesteuertes 3/3-Wege-Ventil im Querschnitt mit Verdrängerkörperlage am linken Fluidausgang,

Fig. 3 ein indirekt gesteuertes 3/3-Lege-Ventil im Querschnitt mit Verdrängerkörperlage am rechten Fluidausgang.

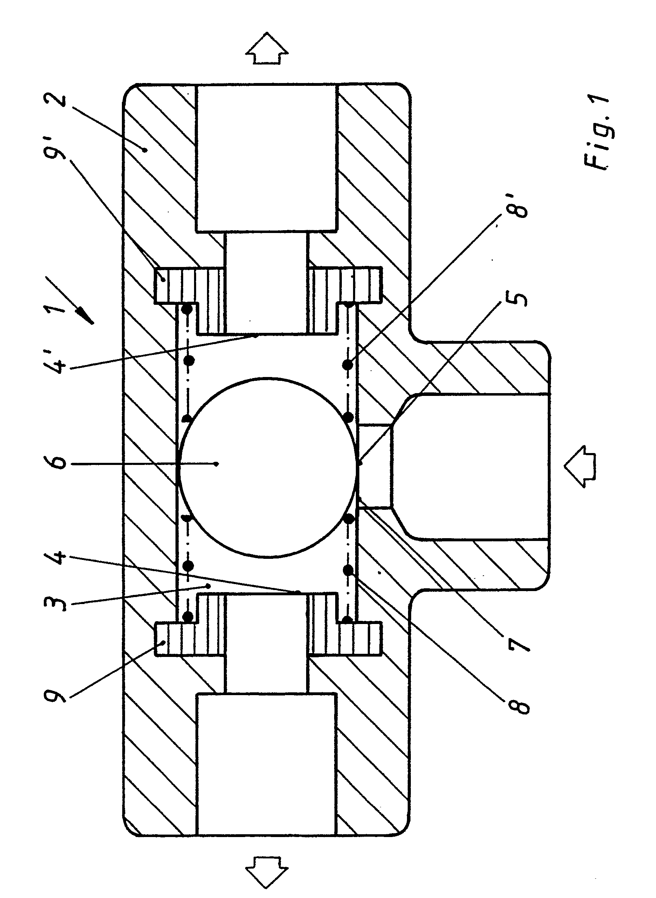

Fig. 1 zeigt ein indirekt gesteuertes 3/3-Wege-Ventil mit einem Ventilkörper 2 und einem Verdrängerkörper 6, der vorzugsweise als Kugel ausgebildet ist. Der Ventilkörper 2 weist auf seiner Horizontalachse zwei an den Enden des Steuerraumes 3 befindliche sich gegenüberliegende Fluidausgänge 4 und 4' auf. In der Mitte des Steuerraumes 3, um 90° versetzt zu den Fluidausgängen 4 und 4', ist ein Fluideingang 5 vorgesehen. Wenn an den Fluidausgängen 4 und 4' gleicher Druck anliegt, befindet sich der Verdrängerkörper 6 in Mittelstellung unterhalb des Fluideingangs 5, wobei der Verdrängerkörper 6 diesen nicht vollständig schließt, dabei wird der Verdrängerkörper über den Ringspalt 7 durch die Luftumströmung in der Mittelstellung gehalten. Die Mittelstellung kann noch durch mechanische, elektrische oder magnetische Mittel verstärkt stabilisiert werden. In der einfachsten Ausführung dienen hierzu zwei Federn 8 und 8', die sich an den den Fluidausgängen 4, 4' zugeordneten Buchsen 9, 9' abstützen.

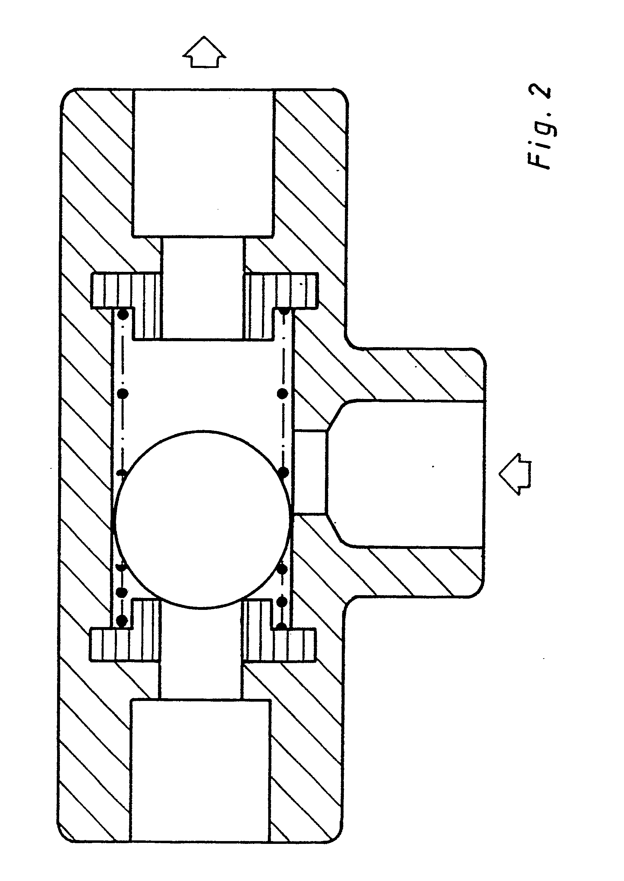

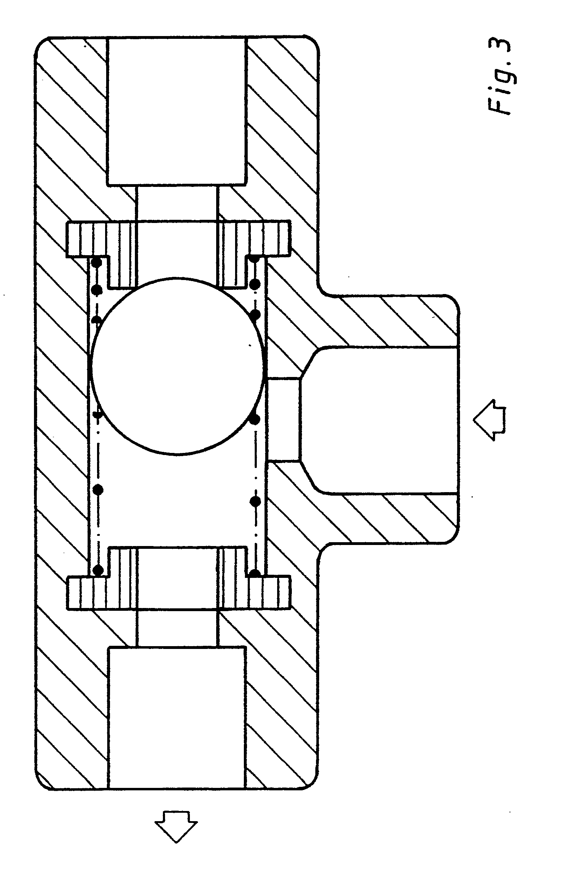

Bei Druckabfall in einem der angeschlossenen Systeme (Ablassen des Druckreglers) verschließt der Verdrängerkörper diesen Kreis - siehe Fig. 2 und Fig. 3 - indem er sich von der Mittelstellung auf den Anschluß des drucklosen Kreises legt. Nur noch der unter höherem Druckniveau stehende Kreis wird befüllt. Bei Druckabfall auch dieses Kreises (Öffnen des zweiten Druckreglers) geht der Verdrängerkörper wieder in Mittelstellung, so daß drucklos durch das Ventil hindurchgefördert werden kann. Bei Druckabfall eines der beiden Vorratskreise unter die Einschaltschwelle eines der Druckregler verschließt der Verdrängerkörper den anderen drucklosen Kreis (Funktion wie Wechselventil) und bewirkt eine ausschließliche Befüllung des unter Druck stehenden abgesunkenen Kreises. Sinken beide Kreise unter die Einschaltschwelle der Druckregler, so wird zunächst der unter höherem Druck stehende Kreis befüllt ("select-high").

Bezugszeichenliste

| 1 | indirekt gesteuertes 3/3-Wege-Ventil |
| 2 | Ventilgehäuse |
| 3 | Steuerbereich |
| 4, 4' | Fluidausgänge |
| 5 | Fluideingang |
| 6 | Verdrängerkörper |
| 7 | Ringspalt |
| 8, 8' | Feder |
| 9, 9' | Buchsen |

**Patentansprüche**

1. Indirekt gesteuertes 3/3-Wege-Ventil mit einem Ventilgehäuse und einem Verdrängerkörper, dadurch gekennzeichnet, daß im Steuerbereich (3) des Ventils (1) zwei diametral auf einer Achse liegende Fluidausgänge (4, 4') und ein zwischen diesen liegender, um 90° versetzter Fluideingang (5) angeordnet sind, wobei die Fluidausgänge (4, 4') von dem Verdrängerkörper (6) verschließbar sind, während der Fluideingang (5) von dem Verdrängerkörper (6) nicht verschließbar ist.

2. Indirekt gesteuertes 3/3-Wege-Ventil nach Anspruch 1, dadurch gekennzeichnet, daß der Steuerbereich (3) zylindrisch ausgebildet ist und als Verdrängerkörper (6) eine Kugel vorgesehen ist.

3. Indirekt gesteuertes 3/3-Wege-Ventil nach Anspruch 1 oder 2, dadurch gekennzeichnet, daß der Steuerbereich (3) derart ausgestaltet ist, daß zwischen Fluideingang (5) und Verdrängerkörper (6) in seiner Mittelstellung ein durchgängiger Ringspalt (7) entsteht.

4. Indirekt gesteuertes 3/3-Wege-Ventil nach den Ansprüchen 1 bis 3, dadurch gekennzeichnet, daß der Querschnitt des Steuerbereiches (3) identisch mit dem Querschnitt des Verdrängerkörpers (6) ist.

5. Indirekt gesteuertes 3/3-Wege-Ventil nach einem oder mehreren der Ansprüche 1 bis 4, dadurch gekennzeichnet, daß zur Stabilisierung der Mittelstellung des Verdrängerkörpers (6) mechanische, elektrische oder magnetische Mittel vorgesehen sind.

6. Indirekt gesteuertes 3/3-Wege-Ventil nach Anspruch 5, dadurch gekennzeichnet, daß der Verdrängerkörper (6) in seiner Mittelstellung vor dem Fluideingang (5) schwimmend in zwei sich an den Fluidausgängen (4, 4') abstützende Federn (8, 8') gehalten ist.

Fig.1

EP 0 461 390 A1

Fig. 2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | US-A-3 856 361  (SWANSON)<br>* Spalte 3, Zeilen 31 - 60; Figur 3 *<br>– – – | 1-3,5-6,4 | B 60 T 11/32<br>F 16 K 17/26 |
| Y | US-A-3 900 230  (DURLING)<br>* Spalte 4, Zeilen 36 - 41; Figur *<br>– – – – – | 4 | |

**RECHERCHIERTE SACHGEBIETE (Int. Cl.5)**

F 15 B
F 16 K
B 60 T

Der vorliegende Recherchenbericht wurde für alle Patentansprüche erstellt

| Recherchenort | Abschlußdatum der Recherche | Prüfer |
|---|---|---|
| Den Haag | 29 Juli 91 | CHRISTENSEN J.T. |